# EUROPEAN PATENT SPECIFICATION

(11) **EP 1 403 541 B1**
(45) Date of publication and mention of the grant of the patent: **27.07.2005**
(21) Application number: 03022208.7
(22) Date of filing: 30.09.2003
(51) Int. Cl.: F16C 29/06, F16C 33/50, F16C 33/46

(54) **Linear rolling element bearing with rollers retained in a flexible cage**
Linearwälzlager mit in einem flexibelen Käfig festgehaltenen Rollen
Palier à roulement linéaire avec rouleaux retenus dans une cage flexible

(30) Priority: 30.09.2002 JP 2002285422
(43) Date of publication of application: 31.03.2004
(73) Proprietor: THK Co., Ltd., Tokyo 141-0031 (JP)
(72) Inventor: Mochizuki, Hiroaki, THK Co., Ltd., Nakakoma-gun Yamanashi-ken 409-3801 (JP); Fujii, Yuuki, THK Co., Ltd., Nakakoma-gun Yamanashi-ken 409-3801 (JP); Horie, Takuya, THK Co., Ltd., Nakakoma-gun Yamanashi-ken 409-3801 (JP)
(74) Representative: Viering, Jentschura & Partner

(56) References cited:
- EP-A- 0 449 595
- EP-A- 0 838 602
- WO-A-01/92738
- DE-A- 4 311 515
- DE-A- 4 331 014
- US-B1- 6 287 005

## Description

### (Field of the Invention)

The present invention relates to a motion guide device for guiding a liner motion or a curved motion of an object to be guided, and in particular, to a rolling type of motion guide device in which rollers to guide a rolling motion is disposed between a track member and a movable member relatively movable to the track member.

### (Related Art)

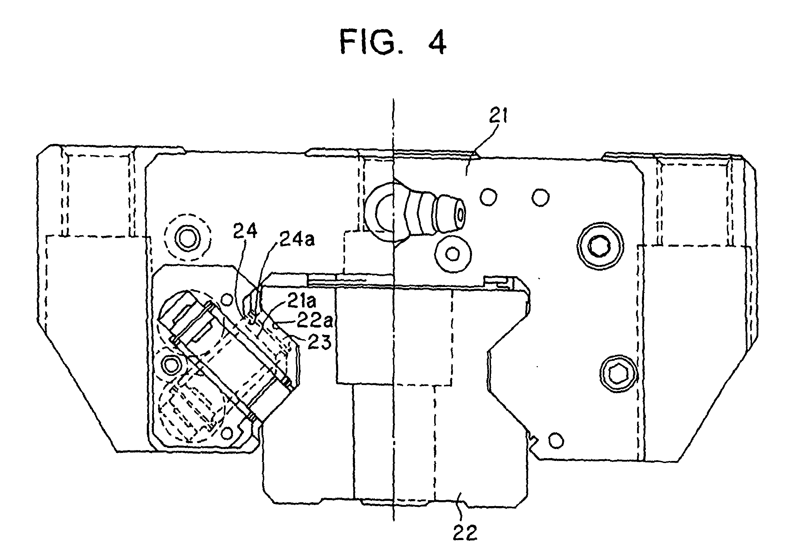

In general, a motion guide device is provided with a track rail, a movable block disposed movably along the track rail, and a plurality of rollers disposed between the track rail and the movable block. Fig. 4 shows a conventional motion guide device that requires rollers to cause a motion of a movable member. When the movable block 21 moves relatively to a track rail 22, rollers 23 located in a loaded range between roller rolling surfaces 21a and 22a are forced to move in a rolling motion so that a relative motion of the movable block 21 is allowed.

A ball, which is one type of rolling member, is usually formed into a sphere member that has an infinite number of rotation axes and is able to rotate in all directions without any restrictions. In contrast, each of the rollers 23 is formed into a cylindrical body, with the result that each roller 23 is obliged to have only one rotation axis, when each roller 23 engages in a rolling motion. In other words, the movable direction of each roller 23 is confined to only one direction. In order to allow the rollers 23 to have rolling motions with no slip, orthogonality should be kept between the rotation axes of the rollers 23 and an advancement direction of the rollers 23.

In the conventional motion guide device that employs the rollers 23, if parallelism between the roller rolling surface 21a of the movable block 21 and the roller rolling surface 22a of the track rail 22 is lost or an offset load is applied to the movable block 21, there are some cases where the orthogonality between the rotation axes of the rollers 23 and an advancement direction of the rollers 23 is lost as well. The phenomenon that the rollers 23 are skewed against the normal rotation axes thereof is called "skew."

In order to prevent the skew phenomenon, the conventional motion guide device adopts a step 24 formed on one edge of the roller rolling surface 21a of the movable block 21. The step 24 is shaped to have a contact protrusion 24a, to which one end surface of each roller 23 is permitted to be contacted, the one end surface being orthogonal to the rotation axis direction thereof. The presence of the contact protrusion 24a prevents the rollers 23 to be skewed (refer to Japanese Patent Laid-open (KOKAI) publication No. 2002-54633). This contact protrusion 24a may be formed, as illustrated in Fig. 4, on only one-side end surface of the rolling roller surface 21a in the axis-line direction thereof or may be formed on both-side end surfaces thereof. Alternatively, the step is formed on only one side of the rolling roller surface and an iron plate is disposed on the other side of the rolling roller surface so as to face and push each roller so that a gap between the rollers and the rolling roller surface is adjusted.

However, when the rollers are skewed, a force pressing the contact protrusion becomes extremely larger, due to the inclination of the rollers. The conventional contact protrusion is therefore made of metal whose strength is larger (for example, a metal made of the same material as that used to form the roller rolling surface of the movable block). It has long been common knowledge to prevent the skews of the rollers using contact between metal members.

However, the contact between metal members causes a higher friction factor, thereby increasing slide resistance occurring when the movable block slides along the track rail. Therefore, it may be difficult to obtain smooth and stable motions of the movable block.

Document EP 0 838 602 A discloses a linear roller guide device comprising a track rail 202, a movable block 204 assembled to be movable on an upper surface of the track rail 202 through four rows of rollers 203, a circulating passage for the rollers 203 constituted by the loaded area between the roller rolling surfaces 206, 207, 205, 208 of the metal-block body 2040 of the movable block 204 and corresponding to the track rail 202, by the direction changing passage 210 and the roller returning passage 209. The block body 2040 is provided with returning passages 209 for circulating and guiding the rollers 203. The roller returning passage 209 lineraly extends in parallel to the respective roller rolling surfaces 205, 206 formed to the block body 2040. Further the document discloses rollers 203 which are linked to each other by a roller chain 218, which is a resin molded product and comprises spacer portions 218a which are disposed between the adjacent rollers 203 and provided with a retaining recessed portion 218c on the both side surfaces having a shape corresponding to the surface of the roller 203. The loaded roller end surface guide walls 213 for guiding both end surfaces of the roller 203 are formed with guide grooves 213a with which the guide projecting portions 2181 of the roller chain 218 are engaged. In order to form the loaded roller end surface guide wall 213, the block body 2040 comprises first to third surface guide wall forming members 2141-2143 composed of resin.

Document US 6 287 005 A discloses a roller guiding apparatus 1 including an elongate traveling rail 2 having a plurality of roller-rolling surfaces 5 formed thereon, a movable body 3 having a plurality of roller-rolling surfaces 6 formed thereon in confrontation with the corresponding roller-rolling surfaces 5 of the traveling rail 2, respectively, and a multitude of rollers 4 disposed between the corresponding roller-rolling surfaces 5, 6 of the rail 2 and the movable body 3. The rollers 4 are formed into a plurality of trains of rollers, each train of rollers being held in position by means of a roller connector 20. Each of the roller connectors 20 includes a belt-shaped body or member 26 having a multitude of reception holes 24 for holding the rollers 4 formed along the length thereof at a predetermined pitch with a spacer portion 25 interposed between adjacent holes, and a pair of end-face holding plates provided on the widthwise opposite side edges of each reception hole 24 in the belt member 2. The end-face holding plates 27 are provided at their center with engagement projections 28 which are in fitting engagement with center holes 4a formed on the opposite end faces of each roller 4 for rotational sliding movement. The end-face holding plates 27 of each roller connector 20 are guided by an inner wall of a corresponding roller-traveling groove 6. The movable body 3 comprises a block member 10 having a block body proper 7 and pair of legs 8, 8 extending downward from the transversely opposite ends of the block body proper 7, and a pair of side covers 11, 11 fitted to the axial or longitudinal ends of the block member 10. The block body proper 7 and the opposite legs 8, 8 are respectively provided with roller return passages 12 extending in parallel with the roller-rolling surfaces 6 formed on the inner surface thereof.

The present invention has been conceived in consideration of the above matters, and an object of the present invention is to provide a motion guide device capable of not only preventing the skews of the rollers but also reducing the slide resistance occurring when the movable member slides along the track member in a simple and costs saving manner.

### Summary of the Invention

In order to accomplish the above object, the present invention provides a motion guide device comprising a track member having a roller rolling surface thereon; a movable member having a roller circulation passage including a loaded roller rolling surface located to be opposed to the roller rolling surface and being arranged to the track member to be movable relatively to the track member; a plurality of rollers, each made of metal, disposed in the roller circulation passage with a rotation axis of each of the rollers parallel to each other to thereby circulate in response to a relative motion of the movable member to the track member; and a roller retainer to retain the plurality of rollers rotatably and slidably. The movable member has contact protrusions formed thereon and made only of resin, to thereby allow the contact protrusions to come in contact with both axis-line-direction end surfaces of each of the rollers that roll along the loaded roller rolling surface, said contact protrusions being located only on an outer side relative to the rotation axis of each roller that rolls along the loaded roller rolling surface.

Thus, in the present invention, even though rollers are skewed, the contact protrusion made to prevent the skews and the end surface of the rollers are brought into contact with each other through collisions between the resin and metal materials. Accordingly, a friction factor between the contact protrusion and the end surface reduces, thus lowering sliding resistance caused when the movable member slides along the track member. This makes the movable member move in a smooth and stable manner. In addition, the connections of the rollers with the roller retainer make it possible to strengthen resistance against the occurrence of skews. Hence the resin-made contact protrusions are able to prevent the rollers from being skewed.

Preferably, the roller retainer is placed to intervene between two of the rollers and is provided with a plurality of spacer members with two recessed surfaces on both sides thereof, each of the recessed surfaces being consistent in a shape with an outer circumferential surface of the roller located next to each roller, and a connection member placed to expand outwardly from a rotation-axis-direction end surface of each of the rollers and to connect the spacer members with each other.

Still preferably, the contact protrusion is formed on a support member to prevent the rollers from coming off from the loaded roller rolling surface by establishing a link with the connection member of the roller retainer when the movable member is removed from the track member.

Thus, the roller retainer is able to have both the functions of preventing the rollers from coming off when the movable member is removed from the trail member and preventing the rollers from being skewed.

### Brief Description of the Drawings

Other objects and aspects of the present invention will become apparent from the following description and embodiments with reference to the accompanying drawings in which:
Fig. 1 is a disassembled perspective view explaining a linear motion guide device according to an embodiment of the present invention;
Fig. 2 is a perspective view showing rollers retained by a roller retainer;
Fig. 3A is a detailed partial section showing a roller-supporting structure according to the embodiment, in which a roller rolls between a track rail and a movable block;
Fig. 3B is a detailed partial section showing a roller-supporting structure according to a comparative example, in which a roller rolls between a track rail and a movable block; and
Fig. 4 shows the front view of a conventional motion guide device.

### Detailed Description of Preferred Embodiment

A preferred embodiment of the present invention will now be described together with accompanying drawings.

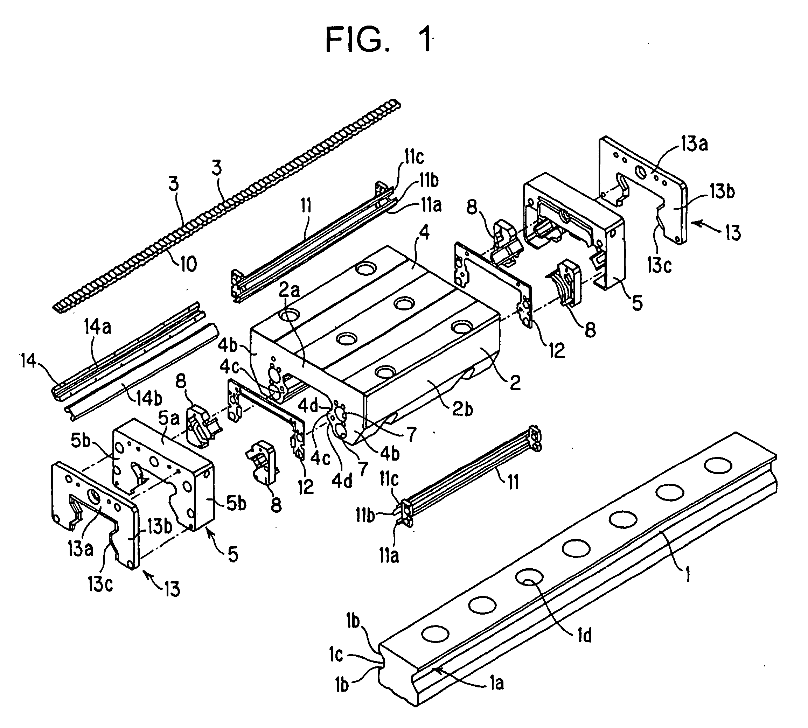

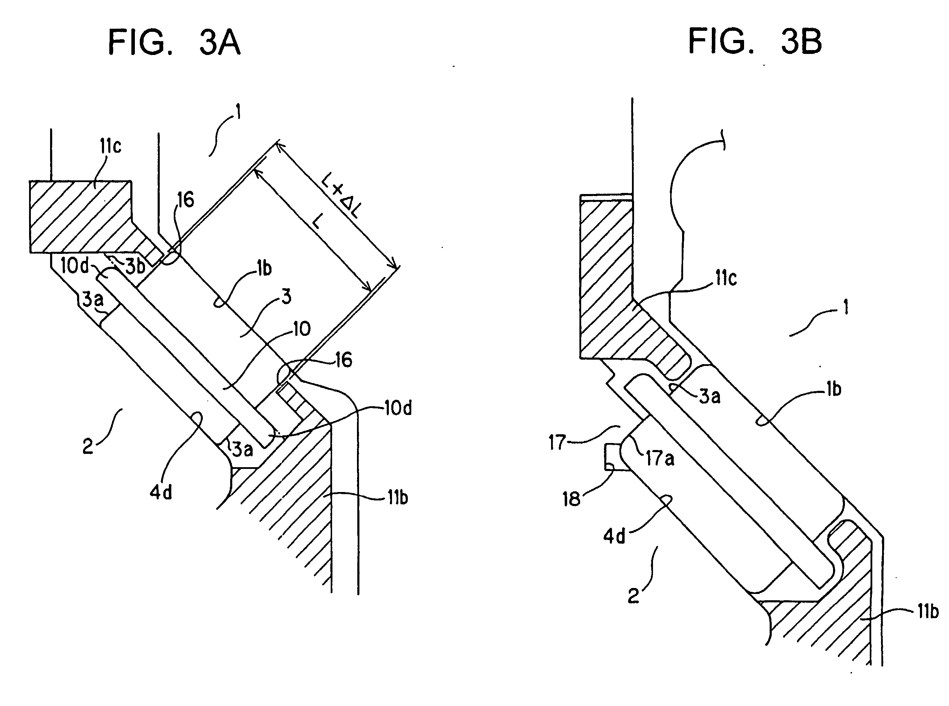

Referring to Figs. 1 to 3A and 3B, a linear motion guide device according to an embodiment of the present invention will now be described.

The linear motion guide device is provided with a linearly elongated track rail 1 serving as a track member and a movable block 2, which serves as a movable member, assembled with the track rail 1 so as to relatively be slidable along the track rail 1. Between the track rail 1 and the movable block 2, there are provided a large number of rollers 3 which serve as a plurality of rolling members. The rollers 3 are made of metal and formed so as to roll.

To be specific, the track rail 1 is produced to have an approximate rectangle in section orthogonal to its longitudinal direction. On each of both lateral sides of the track rail 1, a groove 1a composed of wall surfaces 1b and 1b and a bottom surface 1c is formed along the longitudinal direction.

In each groove 1a, both the wall surfaces 1b and 1b are crossed at right angles. Each of the upper wall surface 1b and the lower wall surface 1b provides a roller rolling surface serving as a rolling member rolling portion along which the rollers 3 roll. That is, on the right and left sides of the track rail 1 are formed four roller rolling surfaces 1b in total, i.e., upper and lower rolling surfaces (two rolling surfaces) on each side. These roller rolling surfaces are formed in parallel to each other to extend along the track rail 1.

The movable block 2 is provided with a central portion 2a facing an upper surface of the track rail 1 and side wall portions 2b and 2b respectively extending downward from both side ends of the central portion 2a and facing both of lateral side surfaces of the track rail 1.

The central portion 2a has a steel-made main block 4, a resin-made circulation passage forming structure built in the main block 4, and a pair of side lids 5 and 5 located on both lateral surfaces of the main block 4 in which the resin-made circulation passage forming structure is built, both the lateral surfaces being along a moving direction of the main block 4.

On side wall portions 4b and 4b of the main block 4, protrusions 4c and 4c are formed, the shape of each protrusion 4c being consistent with the shape of each groove 1a formed on each side surface of the track rail 1. On each of the protrusions 4c and 4c are formed two loaded roller rolling surfaces 4d and 4d serving as loaded rolling member rolling portions, each loaded roller rolling surface 4d facing each roller rolling surface 1b. In other words, the loaded roller rolling surfaces 4d are made up of four rolling surfaces in total, i.e., two rolling surfaces (upper and lower rolling surfaces) on each of both right and left side wall portions 4b and 4b of the main block 4. These loaded roller rolling surfaces 4d extend in parallel with each other in the moving direction along which the movable block 2 is moved.

In the side wall portions 2b and 2b of the movable block 2, there are formed upper and lower roller escape passages 7 and 7, which are two in total on each side, and a U-shaped rolling direction changing passage. In each side wall portion 2b, the roller escape passages 7 and 7 are formed to be in parallel with each other and located, predetermined distance apart, from the upper and lower two loaded roller rolling surfaces 4d and 4d, respectively.

The rolling direction changing passage is formed to mutually connect each of the loaded roller rolling surfaces 4d and 4d and both ends of each of the roller escape passages 7 and 7 to have the roller 3 circulated therethrough. These loaded roller rolling surface 4d, rolling direction changing passage, and roller escape passage 7 compose a roller circulation passage.

Of these components, the roller escape passages 7 are formed by four in total, that is, two roller escape passages 7 and 7 at predetermined upper and lower positions in each of the right and left side wall portions 2b and 2b of the movable block 2. On each side of the movable block 2, the rolling direction changing passage connects the upper loaded roller rolling surface 4d and the lower roller escape passage 7 as well as the lower loaded roller rolling surface 4d and the upper roller escape passage 7 so that both the connected passages form an overhead crossing with each other.

The roller circulation passages are formed by four in total, i.e., two in and on each of the lateral side wall portions 2b and 2b, respectively. There are produced two roller circulation passages. Each roller circulation passage is formed to locate in the same plane, with the result that the rollers 3 can circulate two-dimensionally along each roller circulation passage. On each side of the movable block 2, the two planes in which the two roller circulation passages are respectively located crosses with each other at right angles, and one roller circulation passage is arranged at an inner position with respect to the remaining roller circulation passage.

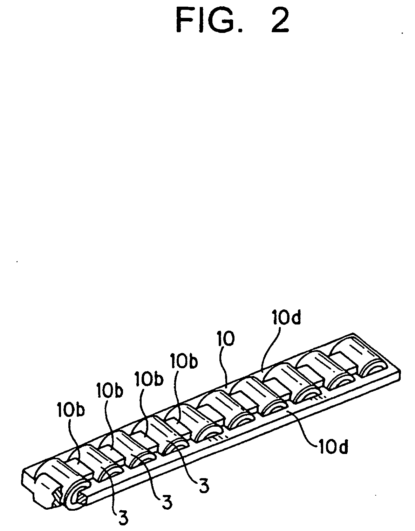

The plural rollers 3 are disposed in each roller circulation passage, with rotation axes of the rollers 3 in parallel with each other. The rollers 3 are mutually connected by a roller retainer 10 so that a chain of rollers 3 is produced. The rollers 3 are retained rotatably and slidably by the roller retainer 10 and are able to circulate along each given roller circulation passage. Fig. 2 shows the rollers 3 retained by the roller retainer 10.

Between the rollers 3 and 3, there is a spacer member 10b. Thus, there are disposed a plurality of spacer members 10b in each train of the rollers 3. On each side of each spacer member 10b is formed a recess of which the curvature agrees with an outer curvature of each adjacent roller 3. The spacer members 10b are mutually coupled by a pair of connection members 10d and 10d located so as to expand outwardly from each end surface in the rotation axis directions of the rollers 3.

As shown in Fig. 1, the resin-made circulation passage forming structure is provided with support members 11 and 11, escape passage forming members 14, and direction changing passage forming members 8.

Among these components, the support members 11 and 11, which extend along side edges of both the loaded roller rolling surfaces 4d and 4d, are disposed to prevent the rollers 3 coming off from the loaded roller rolling surfaces 4d and 4d when the movable block 2 is removed from the track rail 1. The escape passage forming members 14 are placed to form a roller escape passage for the rollers 3, while the direction changing passage forming members 8 are disposed to form a direction changing passage for the rollers 3.

The support members 11 and 11, escape passage forming members 14, and direction changing passage forming members 8 are respectively formed as different members separated from the main block 4 and are made of resin, and then built into the main block 4.

Each of the resin-made support members 11 has first, second and third support members 11a, 11b and 11c each formed into a thin and long-scale member made of a resin material, and is constructed by making the first to third members 11 a to 11c into one unit. The first support member 11a is located under the lower rollers 3, the second support member 11b is located between the lower rollers 3 and the upper rollers 3, and the third support member 11c is located over the upper rollers 3. Each of the support members 11 and 11 is clipped between the pair of side lids 5 and 5 or the paired direction changing passage forming members 8 and 8, so that each support member 11 is supported and fastened with both ends to the movable block 2.

In cases where the movable block 2 is removed from the track rail 1, each support member 11 is able to link with the connection member 10d of the roller retainer 10 to prevent the roller from coming off from the loaded roller rolling surfaces 4d. As will be detailed later, the first, second and third support members 11a, 11b and 11c have contact protrusions 16 and 16 that are able to come into contact with end surfaces of each of the rollers 3 in the axis-line direction thereof (refer to Fig. 3).

The escape passage forming members 14 are composed of a pair of pipe halves 14a and 14b produced by dividing a pipe material into two members in a direction orthogonal to an axis-line direction of the pipe. Each of the pipe halves 14a and 14b is provided with a groove whose shape agrees with that of each roller 3 and continues along its longitudinal direction, and a guide groove to guide the connection member 10d of the roller retainer 10.

The direction changing passage forming members 8 has the U-shaped direction changing passages which are formed in the member 8 to mutually cross in an overhead crossing. In this direction changing passage is formed the guide groove to guide the connection member 10d of the roller retainer 10.

Each side lid 5, which has a cross section consistent with that of the main block 4, includes a central portion 5a and side wall portions 5b and 5b. In each of the side wall portions 5b and 5b, is formed an outer guide portion of the outer-side roller circulation passage. In each of the side wall portions 5b and 5b, the direction changing passage forming members 8 and 8 are built in. The side lids 5 and 5 are secured on both moving-directional sides of the main block 4. Bolts are inserted into bolt insertion holes formed in the side lids 5 and 5, and the bolts are screwed into screw holes formed in the end surfaces of the main block 4, so that the side lids 5 and 5 can be fastened and fixed to the main block 4.

On an inner side of each of the side lids 5 and 5, there are placed lubricant supply plates 12 and 12 to supply lubricant to the loaded roller rolling surfaces of the main block 4.

To an outer side of each of the side lids 5 and 5 (i.e., corresponding to both moving-directional side surfaces of the movable block), end plates 13 and 13 are fastened, respectively. Each of the end plates 13 and 13 is consistent in their cross sections to the main block 4 and has a central portion 13a and side wall portions 13b and 13b. The end plates 13 and 13 are fixed to the side lids 5 and 5, respectively, by using screws. A sealing portion 13c is formed along an inner circumferential edge of each end plate 13, the inner circumferential edge being opposed to the track rail 1.

Fig. 3A shows in detail a section, in which one upper roller 3 rolls between the track rail 1 and the movable block 2, which is concerned with the present embodiment. In contrast, Fig. 3B shows a comparative example to the present embodiment.

On the support members 11b and 11c, contact protrusions 16 and 16 are formed, respectively. Each of the contact protrusions 16 and 16 is able to contact a respective one of both axis-line-direction end surfaces 3a and 3a of each roller 3 that rolls on the loaded roller rolling surface 4d. The contact protrusions 16 and 16 are located outwardly more than the orbit of the rotation axis 3b of each roller 3 rolling along the loaded roller rolling surface 4d and separated by the same distance from the loaded roller rolling surface 4d. A distance L+ΔL between the contact protrusions 16 and 16 is determined such that the distance L+ΔL is slightly larger than a length L of each roller 3 in a rotation-axis direction thereof so as to obtain a clearance ΔL in the rotation-axis direction. Contact of the end surfaces 3a and 3a of each roller 3 to the contact protrusions 16 and 16 prevents the rotation axis 3b of each roller 3 from being shifted from right angles (i.e., from having a tilt to an orthogonal direction) to the moving direction of the rollers 3 during rolling motions of the rollers 3.

In the present embodiment, the contact protrusions 16 and 16 are made only of a resin; no metal constituent is included in the materials of the protrusions 16. Therefore, contact between the end surfaces 3a of each roller 3 and the contact protrusions 16 for preventing the skews of the rollers 3 is carried out between resin and metal materials. When the rollers are in a rolling motion, a friction factor between the end surfaces 3a and the contact protrusions 16 reduces. Hence, sliding resistance caused when the movable block 2 slidably moves along the track rail 1 can also be lowered, thus providing a stable move of the movable block 2.

In addition, since the roller retainer 10 forms up the rollers 3 in line in a predetermined attitude, it is possible to avoid the rollers 3 from being skewed. Even when the rollers 3 is skewed, an elastic restoration force provided by the pair of connection members 10d and 10d is able to get rid of the skews, resulting in that the rollers 3 are able to again retain its rotation axis at right angles. A combined use of the resin-made contact protrusions 16 and 16 and the roller retainer 10 steadily prevents the rollers 3 from being skewed.

Fig. 3B exemplifies another structure, in which a step 17 is formed on the loaded roller rolling surface 4d to produce a metal-made contact surface 17a and this contact surface 17a is positioned to come in contact with one end surface 3a of each roller 3. This structure is able to prevent the skews of the rollers 3 as well.

However, in this case, the skew-preventing contact surface 17a is made of metal, it should be necessary that the surface 17a be subjected to higher-precision grinding work and an escape groove 18 be formed at the root of the step 17.

As described above, the present embodiment employs the resin-made contact protrusions 16, so that it is unnecessary to apply various kinds of work, such as grinding, to the contact protrusions 16. It is therefore possible to manufacture the motion guide device in a cost saving manner.

In the present embodiment, there is an additional advantage about the prevention of one-sided contact of the rollers 3. If the paired contact protrusions 16 and 16 with each roller 3 therebetween are located at different distances from the roller rolling surface 4d, there is a fear that rollers 3 are brought into contact with one-side contact protrusion 16 (i.e., one-sided contact) when the rollers 3 are skewed. By contrast, the device according to the present embodiment is structured to have the paired contact protrusions 16 and 16 located at the same height positions, thus preventing such one-sided contact.

As described above, in the present embodiment, even though rollers are skewed, the contact protrusions and the end surfaces of the rollers are brought into contact with each other through collisions between the resin and metal materials. Accordingly, a friction factor between the contact protrusions and the end surfaces reduces, thus lowering sliding resistance caused when the movable member slides along the track rail, thus making the movable member move in a smooth and stable manner. In addition, the connections of the rollers with the roller retainer make it possible to strengthen resistance against the occurrence of skews. Hence the resin-made contact protrusions are able to prevent the rollers from being skewed.

The present embodiment is particularly effective in cases where the diameter of each roller is so small that a contact surface to be contacted with the end surfaces of the roller cannot be secured. Though the foregoing embodiment has been described about the motion guide device directed to a linear motion guide, the motion is not limited to such a linear motion. The present invention can also be applied to a motion guide device to guide a curved motion. Further, the support members, escape passage forming members, and direction changing passage forming members can be formed as one unit with the main block by the use of insert molding requiring the main block to be inserted.

For the sake of completeness, it should be mentioned that the embodiment and modifications explained so far are not definitive lists of possible embodiments of the present invention. The expert will appreciate that it is possible to combine the various construction details or to supplement or modify them by measures known from the prior art without departing from the basic inventive principle as defined in the claims.

## Claims

1. A motion guide device comprising:
a track member (1) having a roller rolling surface (1b) thereon;
a movable member (2) having a roller circulation passage including a loaded roller rolling surface (4d) located to be opposed to the roller rolling surface (1b) and being arranged to the track member (1) to be movable relatively to the track member (1);
a plurality of rollers(3), each made of metal, disposed in the roller circulation passage with a rotation axis of each of the rollers (3) parallel to each other to thereby circulate in response to a relative motion of the movable member (2) to the track member (1); and
a roller retainer (10) to retain the plurality of rollers (3) rotatably and slidably;
wherein the movable member (2) has contact protrusions (16) formed thereon and made only of resin, to thereby allow the contact protrusions (16) to come in contact with both axis-line-direction end surfaces of each of the rollers (3) that roll along the loaded roller rolling surface (4d), said contact protrusions (16) being located only on an outer side relative to the rotation axis of each roller (3) that rolls along the loaded roller rolling surface (4d).

2. The motion guide device according to claim 1, wherein the roller retainer (10) is placed to intervene between two of the rollers (3) and is provided with a plurality of spacer members (10b) with two recessed surfaces on both sides thereof, each of the recessed surfaces being consistent in a shape with an outer circumferential surface of the roller (3) located next to each roller, and a connection member (10d) placed to expand outwardly from a rotation-axis-direction end surface of each of the rollers (3) and to connect the spacer members (10d) with each other.

3. The motion guide device according to claim 1 or 2, wherein the contact protrusion (16) is formed on a support member (11) to prevent the rollers (3) from coming off from the loaded roller rolling surface (4d) by establishing a link with the connection member (10d) of the roller retainer (10) when the movable member (2) is removed from the track member (1).

## Patentansprüche

1. Eine Bewegungsführungsvorrichtung, aufweisend:
ein Führungselement (1), das eine Rollen-Rolloberfläche (1b) darauf aufweist;
ein bewegbares Element (2), das eine Rollen-Zirkulationsverbindungsstrecke aufweist, die eine beladene Roller-Rolloberfläche (4d) aufweist, die gegenüberliegend der Roller-Rolloberfläche (1b) angeordnet ist und die an dem Führungselement (1) relativ zum Führungselement (1) bewegbar angeordnet ist;
eine Mehrzahl von Rollen (3), wobei jede aus Metall hergestellt ist und in der Rollen-Zirkulationsverbindungsstrecke angeordnet ist, wobei die Rotationsachsen jeder Rolle (3) parallel zueinander sind, sodass die Rollen in Antwort auf eine relative Bewegung des bewegbaren Elements (2) gegenüber dem Führungselement (1) zirkulieren; und
eine Rollen-Halterung (10), um die Mehrzahl der Rollen (3) drehbar und gleitbar zu halten;
wobei das bewegbare Element (2) Verbindungsvorsprünge (16) aufweist, die nur aus Harz hergestellt sind, um dadurch den Verbindungsvorsprüngen (16) zu erlauben, mit beiden Achsenlinienrichtungs-Endoberflächen jeder der Rollen (3) in Kontakt zu kommen, die entlang der beladenen Roller-Rolloberfläche (4d) rollen, wobei die Verbindungsvorsprünge (16) nur an einer Außenseite relativ zu der Drehachse jeder Rolle (3) angeordnet sind, die entlang der beladenen Rollen-Rolloberfläche (4d) rollt.

2. Die Bewegungsführungsvorrichtung nach Anspruch 1, wobei die Rollen-Halterung (10) angeordnet ist, um zwischen zwei der Rollen (3) zu kommen, und mit einer Mehrzahl von Abstandselementen (10b) mit zwei vertieften Oberflächen an beiden Seiten davon ausgestattet ist, wobei jede der vertieften Oberflächen eine mit einer äußeren Umfangsoberfläche der Rolle (3), die neben der jeweiligen Rolle angeordnet ist, einheitliche Form aufweist und ein Verbindungselement (10d), das angeordnet ist, um sich von einer Achsenlinienrichtungs-Endoberfläche jeder der Rollen (3) nach außen zu erstrecken und die Abstandelemente (10d) miteinander zu verbinden.

3. Die Bewegungsführungsvorrichtung nach Anspruch 1 oder 2, wobei der Verbindungsvorsprung (16) auf einem Supportelement (11) geformt ist, um durch Herstellens einer Verbindung mit dem Verbindungselement (10d) der Rollenhalterung (10) zu verhindern, dass die Rollen (3) von der beladenen Roller-Rolloberfläche (4d) wegkommen, wenn das bewegbare Element (2) von dem Führungselement (1) entfernt wird.

## Revendications

1. Dispositif de guidage de mouvement, comprenant :
un élément de voie de roulement (1) possédant dessus une surface de roulement pour rouleaux (1b) ;
un élément mobile (2) possédant un passage de circulation de rouleaux comprenant une surface de roulement pour rouleaux en charge (4d) située en opposition par rapport à la surface de roulement pour rouleaux (1b) et disposée de manière à être mobile par rapport à l'élément de voie de roulement (1) ;
une pluralité de rouleaux (3), chacun constitué de métal, disposés dans le passage de circulation de rouleaux avec un axe de rotation de chacun des rouleaux (3) parallèles aux autres, pour de ce fait rouler en réponse à un mouvement relatif de l'élément mobile (2) par rapport à l'élément de voie de roulement (1) ; et
un élément de rétention de rouleaux (10) destiné à retenir la pluralité de rouleaux (3) en rotation et en glissement ;
dans lequel l'élément mobile (2) dispose de saillies de contact (16) formées dessus et uniquement constituées de résine, pour permettre de ce fait aux saillies de contact (16) de venir en contact avec les deux surfaces d'extrémité dans la direction axiale de chacun des rouleaux (3) qui roulent le long de la surface de roulement pour rouleaux en charge (4d), lesdites saillies de contact (16) étant uniquement situées sur un côté extérieur par rapport à l'axe de rotation de chaque rouleau (3) qui roule le long de la surface de roulement pour rouleaux en charge (4d).

2. Dispositif de guidage de mouvement selon la revendication 1, dans lequel l'élément de rétention de rouleaux (10) est placé de manière à s'interposer entre deux des rouleaux (3) et est muni d'une pluralité d'éléments d'écartement (10b) ayant deux surfaces d'évidement de chaque côté, chacune des surfaces d'évidement ayant une forme correspondant à une surface circonférentielle extérieure du rouleau (3) située à côté de chaque rouleau, et d'un élément de liaison (10d) placé en s'étendant extérieurement à une surface d'extrémité dans la direction de l'axe de rotation de chacun des rouleaux (3) et destiné à relier les uns aux autres les éléments d'écartement (10d).

3. Dispositif de guidage de mouvement selon la revendication 1 ou 2, dans lequel la saillie de contact (16) est formée sur un élément de support (11) pour empêcher que les rouleaux (3) quittent la surface de roulement pour rouleaux en charge (4d) en établissant une liaison avec l'élément de liaison (10d) de l'élément de rétention de rouleaux (10) lorsque l'élément mobile (2) est retiré de l'élément à voie de roulement (1).
